(19) Europäisches Patentamt
European Patent Office
Office européen des brevets

(11) **EP 3 730 535 B1**

(12) **EUROPEAN PATENT SPECIFICATION**

(45) Date of publication and mention of the grant of the patent:
**01.10.2025 Bulletin 2025/40**

(21) Application number: **17935128.3**

(22) Date of filing: **25.12.2017**

(51) International Patent Classification (IPC):
**C08G 64/30** (2006.01)    **C08G 63/64** (2006.01)
**C08G 65/26** (2006.01)    **C09D 175/06** (2006.01)
**C08G 18/44** (2006.01)

(52) Cooperative Patent Classification (CPC):
**C08L 75/06; C08G 18/44; C08G 63/64;
C08G 64/305; C08G 65/2603; C09D 175/06**

(86) International application number:
**PCT/CN2017/118254**

(87) International publication number:
**WO 2019/119466 (27.06.2019 Gazette 2019/26)**

(54) **POLYCARBONATE POLYOL, SYNTHESIS METHOD THEREFOR AND APPLICATION THEREOF**

POLYCARBONATPOLYOL, SYNTHESEVERFAHREN DAFÜR UND ANWENDUNG DAVON

POLYCARBONATE-POLYOL, SON PROCÉDÉ DE SYNTHÈSE ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2017 CN 201711394969**

(43) Date of publication of application:
**28.10.2020 Bulletin 2020/44**

(73) Proprietor: **Wanhua Chemical Group Co., Ltd.**
**Yantai, Shandong 264000 (CN)**

(72) Inventors:
• **SUN, Shuangyi**
  **Yantai, Shandong 264000 (CN)**
• **JU, Changxun**
  **Yantai, Shandong 264000 (CN)**
• **LIU, Bin**
  **Yantai, Shandong 264000 (CN)**
• **ZHAO, Jing**
  **Yantai, Shandong 264000 (CN)**
• **LI, Yuan**
  **Yantai, Shandong 264000 (CN)**
• **HUA, Weiqi**
  **Yantai, Shandong 264000 (CN)**

(74) Representative: **Kador & Partner Part mbB**
**Corneliusstraße 15**
**80469 München (DE)**

(56) References cited:
**EP-A1- 2 213 695      CN-A- 1 444 618
CN-A- 1 522 270      CN-A- 1 616 407
JP-A- 2001 270 938      JP-A- 2001 270 938
US-A1- 2001 047 073      US-B1- 6 566 563**

Remarks:
The file contains technical information submitted after the application was filed and not included in this specification

**Description**

TECHNICAL FIELD

The present invention relates to the technical field of preparation for polycarbonate polyol, in particular to a semi-continuous synthesis method for efficiently preparing polycarbonate polyol.

BACKGROUND OF ART

Polycarbonate polyol is one of the important raw materials for producing polyurethane. For example, as the soft chain end of polyurethane elastomer, it has excellent resistance to hydrolysis, heat, oil, and aging. Polycarbonate polyol is usually made from small molecular polyols or small molecular alcohols and lactones, which undergo transesterification with small molecular carbonates under a catalyst to produce polycarbonate polyol and small molecular by-products. By removing small molecular by-products, the reaction is carried out thoroughly to obtain the product.

The main polycarbonate polyol product is a homopolymerized or copolymerized polycarbonate diol with 1,6-hexanediol (HDO) as the raw material. Homopolymer products use only 1,6-hexanediol as a small molecular polyol, and copolymer products use more than two kinds of raw materials, such as 1,6-hexanediol and 1,4-butanediol (BDO) (specification of Japanese Patent No. 2885872), or 1,6-hexanediol and 1,5-pentanediol (PDO) (specification of Japanese Patent No. 1822688), or 1,6-hexanediol and caprolactone / valerolactone (CN01813544.7).

Another major raw material for the production of polycarbonate polyol is small molecular carbonate, which can be divided into three categories: dialkyl carbonate, diaryl carbonate, and alkylene carbonate. Dialkyl carbonates are, for example, dimethyl carbonate (DMC), diethyl carbonate; diaryl carbonates are, for example, diphenyl carbonate; alkylene carbonates are, for example, ethylene carbonate and propylene carbonate. There is a transesterification reaction between the small molecular carbonate and the small molecular alcohol, in which the carbonyl group enters the product, the groups on both sides are converted to by-products and are removed from the reaction system. Taking dimethyl carbonate as an example, two molecules of methanol are removed. There is also significant gasification of the small molecular carbonate at the reaction temperature due to its low boiling point, so it is necessary to rectify and separate the small molecular carbonate from mixture of the by-products and other compounds. The fraction produced is usually a mixture of carbonate and by-products. For example, when dimethyl carbonate is used, the by-product methanol and the raw material dimethyl carbonate produce an azeotrope, and product in the top of the tower is an azeotropic mixture. Under normal pressure, the composition ratio of the lowest azeotrope approximately is methanol: dimethyl carbonate = 7: 3 (mass), and the methanol content in the actually produced fraction is slightly lower. The boiling points of the raw material polyol and the product are relatively high, and can be easily separated and refluxed into the reaction reactor during rectification.

In the production of polycarbonate polyol, a product with a specific molecular weight (such as 1000 or 2000) needs to be output, or a product with a specific hydroxyl value (such as 112 mgKOH / g or 56 mgKOH / g), which is commonly used in the industry, needs to be output. Therefore, it is necessary to accurately measure the proportion of alcohol and carbonate participating in the reaction. However, in the production process, in order to promote the reaction to proceed faster, in the production of polycarbonate polyol using dimethyl carbonate (DMC) as a raw material, one method is to pressurize the system (for example, CN200410079804.1) to assist raising the reaction temperature. When using other raw materials to produce polycarbonate polyol, one method is to reduce the pressure to distill off the by-products as soon as possible. A process for preparing a polycarbonate polyol from a diol and DMC, wherein methanol formed by the reaction is continuously distilled off, is disclosed for example in US 6,566,563 B1. Whether it is pressurized or depressurized, there will be a large difference between the amount of carbonate actually participating in the reaction and the predetermined stoichiometric amount of carbonate, which will seriously affect the hydroxyl value (molecular weight) of the product. This problem is especially obvious when the raw material is DMC.

A batch process is usually used in the production of polycarbonate polyol, that is, component A (polyol and / or lactone), component B (carbonate) and catalyst are put into the reactor all together at one time. For example, CN200880116024.6 adopts the method of inputting dimethyl carbonate, diethyl carbonate or ethylene carbonate (ethylene carbonate) all together at one time. The method with one-time feeding of polyol and continuous feeding of carbonate is also adopted (CN200410079804.1, CN02813233.5). In both methods, fractions are continuously produced. In these known methods, no matter whether the carbonate is a one-time feeding or a continuous feeding, due to the unstable composition of the material in the reactor, there is a certain difference between the amount of carbonate actually participating in the reaction and the need amount of the carbonate as theoretically required to participate in the reaction, resulting in significant fluctuations in the molecular weight (hydroxyl value) of the reaction products, which ultimately leads to a decrease in the feasibility of stable production.

In order to ensure a qualified molecular weight of the product, a subsequent stoichiometric correction is usually used in the prior art (or referred to as hydroxyl value correction). One method of the existing production technology is to add excess carbonate to make the molecular weight higher after the reaction is completed, and then the molecular weight (hydroxyl value) of the product is tested, the calculated amount of diol component is added, and the molecular weight (hydroxyl value) is adjusted to meet the eligibility requirements (for example, CN02813233.5).

However, subsequent correction requires additional production time, which is not conducive to the improvement of labor productivity. Of course, the method of testing the hydroxyl value and replenishing carbonate after the reaction is close to completion also can be used. However, endcapping needs to be done again in such method, which is more time-consuming.

CN200410079804.1 envisages a method for controlling the stability of the components in the produced fraction, where the reaction is carried out under a pressurized condition. "By continuously controlling the pressure, keeping the transesterification temperature unchanged, and controlling the amount of DMC metered, the prepared low polycarbonate diol has the desired molar mass and molar mass distribution, and no subsequent stoichiometric correction is required." However, this method cannot be realized under a normal pressure reaction, and pressurization leads to additional equipment investment and safety measures, which is economically disadvantageous. Even under a pressurized condition, the adjustment ability of this method is not ideal. In the examples, subsequent stoichiometric correction of the hydroxyl value of the product is still required.

Therefore, how to stably produce products with satisfying the hydroxyl value requirements and simplify post-processing operations when producing polycarbonate polyols is one of the technical difficulties that need to be broken through in this technical field.

## SUMMARY OF THE PRESENT INVENTION

In order to solve the problems in the prior art, the present invention provides a novel synthesis method for polycarbonate polyol, in which products meeting the hydroxyl value requirements can be stably produced, and cumbersome post-processing operations can be avoided.

To achieve its object, the present invention adopts the following technical solutions:

The present invention provides a synthesis method for a polycarbonate polyol. The synthesis method performs a transesterification reaction between raw material A containing a polyol or a mixture of a polyol and a lactone, and a carbonate to produce the polycarbonate polyol; the raw material A is fed to the reaction system all together at one time; the carbonate with a predetermined stoichiometric amount of carbonate feed is put into the reaction system in a manner of continuous feeding; during the reaction, an azeotrope of by-products and the carbonate is distilled; during feeding process of the carbonate with a predetermined stoichiometric amount of carbonate feed, samples are taken to monitor mass percentage of the carbonate in the distillates; before the feeding process of the carbonate with a predetermined stoichiometric amount of carbonate feed is completed, the absolute value of the difference between the mass percentage of carbonate contained in rectified fraction and the preset value is controlled to be ≤ 2%, and the difference between the maximum value and the minimum value of the mass percentage of carbonate contained in the rectified fraction is controlled to be ≤ 2%; and / or, before the feeding process of the carbonate with a predetermined stoichiometric amount of carbonate feed is completed, based on the predetermined stoichiometric amount of carbonate feed, the amount of carbonate added to the reaction system increases or decreases correspondingly according to the mass percentage of carbonate in the rectified fraction which is higher or lower than the preset value, so that the mass $Z1$ of the carbonate actually consumed in the reaction to produce the target product and the mass $Z2$ of the carbonate as theoretically required in reaction to produce the target product satisfy the following relationship: $| Z1\text{-}Z2 | \times 100\% / Z2 \leq 0.1\%$ wherein the "predetermined stoichiometric amount of carbonate feed" mentioned herein refers to: according to the preset mass fraction of carbonate contained in the rectified fraction, calculating the consumed amount of carbonate as theoretically required in reaction to produce polycarbonate polyol and the amount of unreacted carbonate which is taken out by rectification during the production process, and the predetermined stoichiometric amount of carbonate feed is obtained by adding the two amounts.

According to the synthesis method of the present invention, in a preferred embodiment, during the process of feeding carbonate into the reaction system in a manner of continuous feeding, a feed rate of the carbonate is controlled to be adding 1/15-1/2 of the predetermined stoichiometric amount of carbonate feed per hour, preferably 1/10-1/3, and more preferably 1/8-1/5; using the preferred feed rate is beneficial to obtain a more stable composition of fractions, thereby reducing the need for subsequent adjustment of mass of carbonate feed.

According to the synthesis method of the present invention, preferably, the rectified fraction is partially refluxed into the reaction system, and the reflux ratio is controlled to be 1:5-20:1, preferably 1:1-2:1. In a preferred solution, the reflux ratio of the rectified fraction is adjusted so that the absolute value of the difference between the mass percentage of carbonate contained in the rectified fraction and the preset value is ≤ 2%, and the difference between the maximum value and the minimum value of the mass percentage of carbonate contained in the rectified fraction is <2%. In a specific preferred embodiment, according to the increase or decrease of the mass percentage of carbonate contained in the rectified fraction, the reflux ratio of the rectified fraction is correspondingly increased or decreased, so that the absolute value of the difference between the mass percentage of the carbonate contained in the rectified fraction and the preset value is ≤ 2%, and the difference between the maximum value and the minimum value of the mass percentage of the carbonate contained in the rectified fraction is ≤ 2%; but it is not necessary to adjust in this way, as long as the adjustment method can meet the following requirements: the absolute value of the difference between the mass percentage of the carbonate contained in the rectified fraction and the preset value is ≤ 2%, and the difference between the maximum value and the minimum value of the mass percentage of the carbonate contained in the rectified fraction is ≤ 2%.

In a preferred embodiment of the synthesis method according to the present invention, the synthesis method includes the following steps:

(1) the raw material A is fed into the reaction system all together at one time, melted, and nitrogen displacement is conducted, and the atmospheric pressure is maintained after the nitrogen displacement; the temperature is raised to the transesterification reaction temperature, which is 95-260 °C, preferably 100-220 °C, more preferably 160-200 °C;

(2) the carbonate with a predetermined stoichiometric amount of carbonate feed is continuously added to the reaction system; an azeotrope of by-products and carbonate is rectified during the reaction process, part of the rectified fraction is refluxed to the reaction system; during the feeding process of the carbonate with a predetermined stoichiometric amount of carbonate feed, samples are taken to monitor mass percentage of the carbonate in the fractions; the sampling frequency can be real-time monitoring or 1-100 times per batch reaction, preferably 5-10 times; the absolute value of the difference between the mass percentage of carbonate contained in the rectified fraction and the preset value is controlled to be ≤ 2%, and the difference between the maximum value and the minimum value of the mass percentage of carbonate contained in the rectified fraction is controlled to be <2%. Based on the predetermined stoichiometric amount of carbonate feed, the amount of carbonate added to the reaction system increases or decreases correspondingly according to the mass percentage of carbonate in the rectified fraction which is higher or lower than the preset value, so that the mass $Z1$ of the carbonate actually consumed in the reaction to produce the target product and the mass $Z2$ of the carbonate as theoretically required in reaction to produce the target product are consistent or close to each other; wherein the following relationship is preferably satisfied between the $Z1$ and $Z2$: $|Z1-Z2| \times 100\% / Z2 < 0.1\%$;

(3) the fraction continues to be produced after the carbonate feed is completed; preferably, after the carbonate feed is completed, the reaction temperature is controlled to be 160-260 °C, further preferably 160-200 °C, more preferably higher than the reaction temperature during the carbonate feeding in order to achieve the purpose of promoting the removal of by-products;

(4) inert gas is introduced into the reaction system to perform gas stripping, and / or vacuum evacuation is performed; preferably, the vacuum evacuation reduces the reaction pressure to 10 kPa or less, more preferably 5 kPa or less.

In another preferred embodiment of the synthesis method according to the present invention, the synthesis method includes the following steps:

(1) the raw material A is fed into the reaction system all together at one time, melted, and nitrogen displacement is conducted, and the atmospheric pressure is maintained after the nitrogen displacement; the temperature is raised to the transesterification reaction temperature, which is 95-260 °C, preferably 100-220 °C, more preferably 160-200 °C;

(2) the carbonate with a predetermined stoichiometric amount of carbonate feed is continuously added to the reaction system; an azeotrope of by-products and carbonate is rectified during the reaction process, part of the rectified fraction is refluxed to the reaction system; during the feeding process of the carbonate with a predetermined stoichiometric amount of carbonate feed, samples are taken to monitor mass percentage of the carbonate in the fractions, and based on the predetermined stoichiometric amount of carbonate feed, the amount of carbonate added to the reaction system increases or decreases correspondingly according to the mass percentage of carbonate in the rectified fraction which is higher or lower than the preset value, so that the mass $Z1$ of the carbonate actually consumed in the reaction to produce the target product and the mass $Z2$ of the carbonate as theoretically required in reaction to produce the target product are consistent or close to each other; wherein the following relationship is preferably satisfied between the $Z1$ and $Z2$: $|Z1-Z2| \times 100\% / Z2 \leq 0.1\%$;

(3) the fraction continues to be produced after the carbonate feed is completed; preferably, after the carbonate feed is completed, the reaction temperature is controlled to be 160-260 °C, further preferably 160-200 °C, more preferably higher than the reaction temperature during carbonate feeding;

(4) inert gas is introduced into the reaction system to perform gas stripping, and / or vacuum evacuation is performed;

preferably, the vacuum evacuation reduces the reaction pressure to 10 kPa or less, more preferably 5 kPa or less.

In the synthesis method of the present invention, the following relationship is satisfied between the Z1 and Z2: | Z1-Z2 | ×100%/Z2≤0.1%. The mass of the carbonate consumed in the reaction that actually produces the target product can be calculated by calculating the amount of carbonate contained in the produced fraction and the amount of carbonate required to convert to the amount of by-products contained in the fraction. Through the process of the present invention, the actual amount of carbonate feed can be adjusted so that the mass of the carbonate consumed in the reaction to produce the target product and the mass of the carbonates as theoretically required in reaction to produce the target product are consistent or close to each other, which is beneficial to obtain products with more stable hydroxyl value, reduce or avoid the subsequent correction of hydroxyl value, and improve labor productivity. By controlling the absolute value of the difference between the mass percentage of carbonate contained in the rectified fraction and the preset value to be ≤ 2%, and the difference between the maximum value and the minimum value of the mass percentage of carbonate contained in the rectified fraction to be ≤ 2%, one can reduce or avoid adjusting the actual amount of carbonate feed.

The letter A in the "raw material A" herein is just a code used for convenience of description and quotation in the followings, and has no specific technical connotation.

The by-products described in the present invention mainly refer to small molecules that are removed from the carbonate molecule due to the required transesterification of the polyol and the carbonate. For example, when the carbonate is dimethyl carbonate, the by-product is methanol; when the carbonate is ethylene carbonate, the by-product is ethylene glycol. In the production practice, some volatile small molecules may be generated due to side reactions. The by-products described in the present invention also include such substances; for example, when 1,4-butanediol is used as a raw material, a side reaction often occurs to produce water and tetrahydropyran; when 1,5-pentanediol is used as the raw material, a side reaction often occurs to produce water and tetrahydrofuran. These volatile small molecules will also be rectified and discharged and are also included in the by-products.

The "predetermined stoichiometric amount of carbonate feed" mentioned herein refers to: according to the preset mass fraction of carbonate contained in the rectified fraction (or simply referred to as the preset value), calculating the consumed amount of carbonate as theoretically required in reaction to produce polycarbonate polyol and the amount of unreacted carbonate which is taken out by rectification during the production process, and the predetermined stoichiometric amount of carbonate feed is obtained by adding the two amounts. The "preset value" is determined according to actual production conditions in actual production, and varies according to factors such as raw materials, reactors, reaction conditions; the person skilled in the art can determine the preset value of the mass percentage of carbonate contained in the rectified fraction according to the prior art in the field by routine test.

Taking an example of a reaction system which uses dimethyl carbonate as a carbonate raw material, when the mass percentage of carbonate in the rectified fraction is higher or lower than the preset value, based on the predetermined stoichiometric amount of carbonate feed, the corresponding calculation method of increasing or decreasing the amount of carbonate added to the reaction system is: the mass percentage of carbonate contained in the preset rectified fraction (that is, the "preset value") is c, and the mass percentages of methanol corresponding to the fractions 1, 2, 3, ..., n actually produced at different times are respectively $j_1, j_2, j_3, ... j_n$, and the carbonate mass percentages are respectively $t_1, t_2, t_3, ... t_n$, the masses of the fractions produced in this stage are respectively $m_1, m_2, m_3, ..., m_n$, and the calculation process is as follows:

The mass of methanol in the actually produced fraction n is M methanol = $j_n * m_n$

The mass of carbonate in the actually produced fraction n is M carbonate = $t_n * m_n$

According to the preset value, the amount of carbonate that should theoretically be taken out of the methanol recovered from the $n^{th}$ fraction is:

$$M_n = [j_n * m_n / (1-c)] * c$$

The amount $C_n$ of carbonate to be compensated for the $n^{th}$ fraction is:

$$C_n = M \text{ carbonate} - M_n = t_n * m_n - [j_n * m_n / (1-c)] * c$$

Therefore, the amount of carbonate that should be added or reduced from the first part to the $n^{th}$ part is:

M carbonate correction = $(t_1 * m_1 + t_2 * m_2 + ... + t_n * m_n) - [(j_1 * m_1 + j_2 * m_2 + ... + j_n * m_n) / (1-c)] * c$

When M carbonate correction is a positive value, it means that the amount of carbonate actually rectified is higher than the amount that should be rectified in theoretical calculations. It is because part of the carbonate is rectified without participating in the reaction, then additional carbonate needs to be added. When M is a negative value, less carbonate is required to be added.

When using other raw materials, the above calculation could also be referred to. For example, when the raw material is diethyl carbonate, the value of methanol involved in the calculation process can be replaced with that of ethanol; when the raw material is diphenyl carbonate, the corresponding value of methanol can be replaced with that of phenol; when the raw material is ethylene carbonate, the corresponding value of methanol can be replaced with that of ethylene glycol; and so on, and no more detailed examples are given herein.

In the synthesis method of the present invention, preferably, the reaction temperature of transesterification is 95-260 °C, further preferably 100 °C-220 °C, more preferably 160-200 °C.

In the synthesis method of the present invention, preferably, the raw material A is melted, or the raw material A and the catalyst are melted and mixed, and nitrogen displacement is performed; the temperature is raised to the reaction temperature; afterwards, carbonate with a predetermined stoichiometric amount of carbonate feed is added in a manner of continuous feeding; in a preferred embodiment, normal pressure is maintained after the nitrogen displacement is performed. The time required for carbonate feed is related to the feed rate. In a preferred embodiment, the time required for carbonate feed is 2-15 hours, further preferably 3-10 hours, and more preferably 5-8 hours.

In the synthesis method of the present invention, it is preferred to continue to produce the fraction after the carbonate feeding is completed. Preferably, after the carbonate feeding is completed, the temperature of the reaction system is controlled to be 160-260 °C, preferably 160-200 °C, more preferably higher than the reaction temperature during the carbonate feed.

In the synthesis method of the present invention, in order to promote the extraction of by-products, as a preferred embodiment, preferably one or two of the following operations are performed: inert gas is introduced into the reaction system for gas stripping; or, the pressure of the reaction system is reduced to 10 kPa or less, preferably 5 kPa or less; preferably, the operation of reducing the pressure is performed at the end of the reaction, for example, the operation of reducing the pressure is performed when the amount of fraction produced reaches 90% or more. Those skilled in the art may also use other existing technical means to promote the extraction of by-products.

In actual production, the composition of the produced fraction can be determined by methods such as gas chromatography; roughly, the composition of the produced fraction can also be monitored by monitoring the top temperature of the rectification column in real time; it can also be performed using an online infrared, or high-precision refractometer, etc. for monitoring. The specific measurement and monitoring means of the composition of fractions are well known in the art, and will not be repeated herein. The mass of the produced fractions can be monitored by flow meters, level gauges or weighing.

In the synthesis method of the present invention, it is not necessary to adjust the amount of polyol raw materials and oligomers produced in the reaction system, because the influence of the two on the composition of the overhead fraction is usually small to a negligible extent.

In the synthesis method of the present invention, as a specific embodiment, when the raw material is diphenyl carbonate, a catalyst may not be added. More preferably, in the synthesis method of the present invention, the transesterification reaction is carried out in the presence of a catalyst to promote an increase in the reaction rate. The catalyst is preferably fed into the reaction system all together at one time. Preferably, the catalyst is one or more of alkali metal compounds, alkaline earth metal compounds, organometallic compounds, organic amine compounds; more preferably one or more of sodium hydroxide, sodium methoxide, sodium ethoxide, tetrabutyl titanate, isopropyl titanate, stannous octoate, triethylamine, pyridine, N-methylimidazole.

In the synthesis method of the present invention, when the catalyst is one or more of alkali metal compound, alkaline earth metal compound, and organometallic compound, based on the corresponding metal element in the catalyst, mass fraction of the catalyst in the polycarbonate polyol obtained is ≤100ppm, preferably ≤25ppm, more preferably ≤14ppm; when the catalyst is one or more of organic amine compounds, based on the nitrogen element in the catalyst, mass fraction of the catalyst in the polycarbonate polyol obtained is ≤20 ppm, preferably ≤10 ppm, and more preferably ≤5 ppm.

In a more preferred embodiment, the catalyst used in the synthesis method of the present invention is one or two of tetrabutyl titanate and isopropyl titanate, and the amount of the catalyst is 1-100 ppm of the mass of the polycarbonate polyol to be theoretically produced, preferably 4-90 ppm; or, based on the Ti element in the catalyst, the amount of the catalyst is preferably 0.7-14ppm of the mass of carbonate polyol to be theoretically produced; the products prepared by this preferred solution do not need catalyst inactivation (or called deactivation) treatment.

In the synthesis method of the present invention, the polyol is one or more of C2-C12 diols, triols, and tetrahydric alcohols, preferably one or more of ethylene glycol, diethylene glycol, 1,2-propanediol, 1,3-propanediol, 1,3-butanediol, 1,4-butanediol, 2-methyl-1,3-propanediol, 1,2-pentanediol, 1,5-pentanediol, 1,2-hexanediol, 1,6-hexanediol, neopentyl glycol, 3-methyl-1,5-pentanediol, 1,4-cyclohexanedimethanol, glycerin, trimethylolpropane, pentaerythritol.

In the synthesis method of the present invention, the lactone is preferably one or two of caprolactone or valerolactone.

In the synthesis method of the present invention, the carbonate is preferably selected from one or more of dialkyl carbonate, diaryl carbonate, and alkylene carbonate; preferably, the carbonate is one or more of dimethyl carbonate, diethyl carbonate, ethylene carbonate.

In a specific embodiment of the synthesis method of the present invention, the azeotrope of the by-products and carbonate is produced by rectification through a rectification column, and the number of theoretical plates of the rectification column is preferably 10 or more.

As well known in the art, carbonate feeding and fraction production do not occur at the same time, and fraction production always occurs after the carbonate feeding reaches a certain quality, which is related to the process conditions of reactor type, size, raw material type, reaction temperature, etc. In the synthesis method of the present invention, optionally, upon production of the fraction, the feeding is paused and the fraction is completely refluxed for 0.5-2h, which is beneficial to quickly achieving relatively stable composition of the fraction produced at the top of the column, reducing sampling adjustment frequency, and saving carbonate raw materials, but this complete reflux operation is not mandatory.

In the synthesis method of the present invention, preferably, the polycarbonate polyol product obtained does not require post-treatment; the post-treatment includes any one or more of deactivation, washing, drying, extraction, crystallization, and hydroxyl value correction.

The second aspect of the present invention provides the polycarbonate polyol prepared by the synthesis methods described above.

The third aspect of the present invention provides the use or application of the polycarbonate polyol prepared by the synthesis methods described above. The polycarbonate polyol obtained by the present invention is particularly suitable for the preparation of polyurethane products, such as TPU (thermoplastic polyurethane), CPU (casting polyurethane), spandex, synthetic leather, polyurethane coatings and other polyurethane products.

"More" in "one or more" mentioned in the text means "two or more than two".

The technical solution provided by the present invention has at least one of the following beneficial effects:
The synthesis method of the invention overcomes the defects of unstable production of polycarbonate polyol and long-time consumption in the prior art. In one technical solution of the present invention, by continuously feeding carbonate, the mass percentage of carbonate in the fraction is monitored, and the stability of the carbonate content in the composition of the produced fraction is strictly controlled before the completion of the feeding; the reaction can proceed stably, the reaction speed is fast, and the reaction is easy to control. In yet another technical solution of the present invention, according to the mass percentage of carbonate in the rectified fraction which is higher or lower than the preset value, and based on the predetermined stoichiometric amount of carbonate feed, correspondingly increasing or decreasing carbonates added to reaction system can produce products with qualified hydroxyl value stably and efficiently.

The present invention can produce qualified products stably and efficiently, and the products prepared by the invention do not need stoichiometric correction (that is, correcting the hydroxyl value, or referred to as the hydroxyl value correction), and the production efficiency is high.

In the synthesis method of the present invention, there are less low-boiling carbonates and by-products in the reaction system, and stable production at a higher temperature (160 °C or above) can be maintained; thereby, the reaction temperature can be increased, the reaction speed can be accelerated, the reaction time can be shortened, or the reaction can be carried out with a lower amount of catalyst while maintaining the reaction time unchanged.

The products prepared by the present invention does not require post-treatment or the post-treatment is relatively simple, and does not require catalyst deactivation, washing, drying, extraction, crystallization, etc.

The pressure described in the present invention is absolute pressure.

Compared with the prior art, the synthesis method of the present invention does not need adding additional carbonate (such as DMC) or polyhydric alcohol (such as HDO) based on the product hydroxyl value calculation after the synthesis reaction is completed. In the present invention, there is no need to wait until all fractions have been collected before analyzing and adjusting them, and the fractions can be analyzed at the feeding stage, and then the carbonate feed may be adjusted by predicting.

EMBODIMENT

The following examples are intended to better illustrate the technical solutions of the present invention, and the present invention is illustrated by the following examples.

The following describes the relevant methods used or possibly used in the examples or comparative examples of the present invention: the preset hydroxyl value of the product was obtained through theoretical calculation by formula design; the actual measured hydroxyl value was obtained by chemical titration, specifically referring to the standard HGT 2709-1995; Ti residues was obtained by elemental analysis. The mass of the fraction was obtained by weighing with the balance. The composition of the fraction was determined by the GC correction factor method, and the result was the mass ratio. The above methods were common knowledge in the art and will not be described in detail one by one.

The dimethyl carbonate used in the examples or comparative examples was from Shandong Shida Chemical. The 1,5-pentanediol and 1,6-hexanediol used were purchased from UBE, Japan, and the neopentyl glycol used was produced by Wanhua Chemical. Both isopropyl titanate and tetrabutyl titanate were purchased from Aladdin.

EXAMPLES

Example 1

In this example, the preset value of the mass percentage of carbonate contained in the rectified fraction was 32%.

1,574 g of 1,5-pentanediol and 0.1574 g of isopropyl titanate were weighed and then added to a glass reactor equipped with an oil bath jacket, stirrer, gas inlet, and rectification column. Vacuum extraction and nitrogen ventilation were performed for three times and a normal pressure was maintained. Under the protection of nitrogen, the reaction temperature was raised to 165 °C, and 1700 g (predetermined stoichiometric amount of carbonate feed) dimethyl carbonate was slowly added dropwise to the system. Since the temperature at the top of the column was observed to rise, fractions were continuously produced at a reflux ratio of 2:1 to 1:1. During the continuous feeding process of dimethyl carbonate, the reflux ratio was adjusted according to Table 1 below to maintain the absolute value of the difference between the mass percentage of carbonate contained in the rectified fraction and the preset value $\leq$2%, and to maintain the difference between the maximum value and the minimum value of the mass percentage of carbonate contained in the rectified fraction $\leq$ 2%. For example, when the carbonate content in the sample of fraction 4 was significantly higher than that of fraction 3 and higher than the preset value, the reflux ratio was increased to 2:1. The reflux ratio and fraction mass during sampling (see Table 1 for results) were recorded. The ratio of methanol to DMC in the fraction was determined by GC correction factor method, and the ratio fluctuated within the range of 67.1:32.9-68.3:31.7 (wt%).

After the dropwise addition of dimethyl carbonate was completed (8 hours), the temperature was raised to 200 °C within 1 hour, and the reaction was maintained under 200 °C for 1.5 hours. The temperature in the top of the column was observed to be dropped. The pressure of the system was reduced below 1 kPa with an oil pump, and the reaction was maintained under 200 °C for 15 hours. The vacuum was turned off and the nitrogen was replenished to equilibrate the pressure.

In this example, until the last sampling, 806.0 g of methanol and 384.0 g of dimethyl carbonate were contained in the fraction. According to the conversion by methanol, the amount Z1 of carbonates participating in the reaction was 1132.9 g, and the total mass of the corresponding carbonates in the reaction and in the azeotrope was 1516.9 g. Theoretically, corresponding to 1516.9g of carbonate, the mass Z2 of the carbonate required to participate in the production of the target product was 1136.4g, and the amount of carbonate addition that should be increased was 4.8g, but actually the carbonate that should be increased was not added. | Z1-Z2 | $\times$ 100% / Z2 = 0.3%.

The preset hydroxyl value of the product was 56.0mgKOH / g, and the hydroxyl value measured by actual sampling was 58.2mgKOH / g. Discharge was performed after adjusting the temperature of the product to about 100 °C. The Ti residue in the product was measured to be 13.7 ppm.

Table 1

| Fraction No. | Reflux Ratio | Composition of Fraction ( wt% ) | | Fraction Mass /g | Methanol Mass as Fraction / g | DMC Mass as Fraction / g | Theoretical DMC Mass corresponding to methanol / g | DMC Mass Correction / g |
|---|---|---|---|---|---|---|---|---|
| | | Methanol wt% | DMC wt% | | | | | |
| Fraction 1 | 1.5:1 | 68.3 | 31.7 | 123 | 84.0 | 39.0 | 39.5 | -0.5 |
| Fraction 2 | 1.5:1 | 68 | 32 | 125 | 85.0 | 40.0 | 40.0 | 0.0 |
| Fraction 3 | 1.5:1 | 67.9 | 32.1 | 117 | 79.4 | 37.6 | 37.4 | 0.2 |
| Fraction 4 | 1.5:1 | 67.3 | 32.7 | 120 | 80.8 | 39.2 | 38.0 | 1.2 |

(continued)

| Fraction No. | Reflux Ratio | Composition of Fraction ( wt% ) | | Fraction Mass /g | Methanol Mass as Fraction / g | DMC Mass as Fraction / g | Theoretical DMC Mass corresponding to methanol / g | DMC Mass Correction / g |
|---|---|---|---|---|---|---|---|---|
| | | Methanol wt% | DMC wt% | | | | | |
| Fraction 5 | 2:1 | 67.1 | 32.9 | 122 | 81.9 | 40.1 | 38.5 | 1.6 |
| Fraction 6 | 2:1 | 67.5 | 32.5 | 120 | 81.0 | 39.0 | 38.1 | 0.9 |
| Fraction 7 | 2:1 | 67.9 | 32.1 | 119 | 80.8 | 38.2 | 38.0 | 0.2 |
| Fraction 8 | 1.5:1 | 67.5 | 32.5 | 125 | 84.4 | 40.6 | 39.7 | 0.9 |
| Fraction 9 | 1:1 | 67.9 | 32.1 | 119 | 80.8 | 38.2 | 38.0 | 0.2 |
| Fraction 10 | 1:1 | 67.9 | 32.1 | 100 | 67.9 | 32.1 | 32.0 | 0.1 |
| Total | | | | 1190 | 806.0 | 384.0 | 379.3 | 4.8 |

Example 2

In this example, the preset value of the mass percentage of carbonate contained in the rectified fraction was 32%.

16,261 g of 1,5-pentanediol, 18450 g of 1,6-hexanediol, and 3.45 g of tetrabutyl titanate were weighed, and then added to a stainless steel reactor equipped with an oil bath jacket, stirrer, gas inlet, and rectification column. Vacuum extraction and nitrogen ventilation were performed for three times and a normal pressure was maintained. Under the protection of nitrogen, the reaction temperature was raised to 156 °C, and 35.0 kg (predetermined stoichiometric amount of carbonate feed) dimethyl carbonate was slowly added dropwise to the system. Since the temperature at the top of the tower was observed to rise, fractions were continuously produced at a reflux ratio of 2:1. During the continuous feeding process of dimethyl carbonate, sampling was done online and the mass of total fractions was recorded at the time of sampling; and then the mass of total fractions recorded during the previous sampling was subtracted in sequence to obtain the fraction mass of the corresponding stage of sampling, and the mass of methanol and dimethyl carbonate in the fraction was estimated accordingly (see Table 2 for the results). The ratio of methanol : DMC in the fraction fluctuated within the range of 63.0: 37.0-68: 32.0 (wt%). A total of 25.25 kg of fraction was collected before the end of the continuous feeding process of dimethyl carbonate. According to the calculation results, 0.78 kg of DMC was added additionally so that the total amount of feed was adjusted to 35.78 kg.

After the dropwise addition of dimethyl carbonate was completed (15 hours), the temperature was raised to 200 °C within 75 minutes, and the reaction was maintained under 200 °C for 1.5 hours. The temperature in the top of the column was observed to decrease. The nitrogen flow rate was turned to 20L / h, the system pressure was reduced to below 5 kPa with an oil pump, and the reaction was maintained under 200 °C for 13 hours. The vacuum was turned off and the nitrogen was replenished to equilibrate the pressure.

In this example, until the last sampling, 16.64 kg of methanol and 8.61 kg of dimethyl carbonate were contained in the fraction. According to the conversion of methanol, the mass $Z_0$ of the carbonates participating in the reaction was 23.39 kg, and the total mass of the corresponding carbonate in the reaction and in the azeotrope was 32.00 kg. In theory, corresponding to 32.00 kg of carbonate, the mass $Z_2$ of the carbonate required to participate in the production of the target product was 23.97 kg, and the mass $Z_0$ of the carbonate used in the reaction actually participated in the production of the target product was 23.39 kg before added additionally.

Since 0.78g of DMC that should be increased was added, and 0.58 kg of them was expected to participate in the reaction, so that the mass of carbonate used in the reaction that actually participated in the production of the target product after the addition was $Z_1 = Z_0 + 0.58 = 23.97 = Z_2$. The preset hydroxyl value of the product was 56.1mgKOH / g, and the hydroxyl value measured by actual sampling was 56.1mgKOH / g. Discharge was performed after adjusting the temperature of the product to about 100 °C. The Ti residue in the product was measured to be 11.4 ppm.

In this example, if 0.78 kg DMC that should be increased was not added, the hydroxyl value of the product was expected to reach 72 mgKOH / g, which deviates greatly from the preset hydroxyl value and cannot be used as a qualified product.

Table 2

| Fraction No. | Composition of Fraction ( wt% ) | | Fraction Mass /kg | Methanol Mass as Fraction /kg | DMC Mass as Fraction /kg | Theoretical DMC Mass corresponding to mcethanol /kg | DMC Mass Correction /kg |
|---|---|---|---|---|---|---|---|
| | Methanol wt% | DMC wt% | | | | | |
| Fraction 1 | 63 | 37 | 3.10 | 1.95 | 1.15 | 0.92 | 0.23 |
| Fraction 2 | 64.4 | 35.6 | 3.15 | 2.03 | 1.12 | 0.95 | 0.17 |
| Fraction 3 | 64.5 | 35.5 | 3.15 | 2.03 | 1.12 | 0.96 | 0.16 |
| Fraction 4 | 66 | 34 | 3.20 | 2.11 | 1.09 | 0.99 | 0.09 |
| Fraction 5 | 67.2 | 32.8 | 3.15 | 2.12 | 1.03 | 1.00 | 0.04 |
| Fraction 6 | 68 | 32 | 3.20 | 2.18 | 1.02 | 1.02 | 0.00 |
| Fraction 7 | 67.2 | 32.8 | 3.25 | 2.18 | 1.07 | 1.03 | 0.04 |
| Fraction 8 | 66.8 | 33.2 | 3.05 | 2.04 | 1.01 | 0.96 | 0.05 |
| Total | | | 25.25 | 16.64 | 8.61 | 7.83 | 0.78 |

Example 3

In this example, the preset value of the mass percentage of carbonate contained in the rectified fraction was 32.0%.

494.2 g of neopentyl glycol, 560.7 of 1,6-hexanediol, and 0.0988 g of isopropyl titanate were weighed, and then added to a glass reactor equipped with an oil bath jacket, stirrer, gas inlet, and rectification column. Vacuum extraction and nitrogen ventilation were performed for three times and a normal pressure was maintained. Under the protection of nitrogen, the reaction temperature was raised to 115 °C, and 1000 g (the predetermined stoichiometric amount of carbonate feed) dimethyl carbonate was slowly added dropwise to the system. Since the temperature at the top of the column was observed to rise, fractions were continuously produced at a reflux ratio of 1.7: 1. The ratio of methanol: DMC in the fraction fluctuated within the range of 66.1:33.9-66.5:33.5 wt%. Since the content of dimethyl carbonate in the fraction was monitored to be higher than the preset value during the reaction (see Table 3), additional 16.8g of dimethyl carbonate was added, and actually a total amount of 1016.8g dimethyl carbonate was added.

After the dropwise addition of dimethyl carbonate was completed (8 hours), the temperature was raised to 200 °C within 180 minutes, and the reaction was maintained under 200 °C for 1 hour. The temperature in the top of the column was observed to decrease. The system pressure was reduced to below 3 kPa with an oil pump, and the reaction was maintained under 200 °C for 10 hours. The vacuum was turned off and the nitrogen was replenished to equilibrate the pressure.

In this example, until the last sampling, 448.2 g of methanol and 227.8 g of dimethyl carbonate were contained in the fraction. According to the conversion of methanol, the mass $Z_0$ of the carbonates participating in the reaction was 630.0 g, and the total mass of the corresponding carbonate in the reaction and in the azeotrope was 857.8 g. Theoretically, corresponding to 857.8g of carbonate, the mass $Z_2$ of the carbonate required to participate in the production of the target product was 642.6g, and the mass $Z_0$ of the carbonate used in the reaction actually participated in the production of the target product was 630.0 g before added additionally.

Since 16.8 g of DMC that should be increased was added, and 12.6 g of them was expected to participate in the reaction, so that the mass of carbonate used in the reaction that actually participated in the production of the target product after the addition was $Z_1 = Z_0 + 12.6 = 642.6 = Z_2$.

The preset hydroxyl value of the product was 112.0 mgKOH / g, and the hydroxyl value measured by actual sampling was 111.3 mgKOH / g. Discharge was performed after adjusting the temperature of the product to about 100 °C. The Ti residue of the product was measured to be 16.7 ppm.

In this example, the content of dimethyl carbonate in the fraction was not significantly different from the preset value. If the operation of increasing dimethyl carbonate addition was not performed, the difference between the hydroxyl value of the obtained product and the preset hydroxyl value of the product was within ± 6; In this example, by increasing dimethyl carbonate addition, the hydroxyl value of the prepared product was closer to the preset hydroxyl value of the product.

Table 3

| Fraction No. | Composition of Fraction ( wt% ) | | Fraction Mass /g | Methanol Mass as Fraction /g | DMC Mass as Fraction /g | Theoretical DMC Mass corresponding to methanol /g | DMC Mass Correction /g |
|---|---|---|---|---|---|---|---|
| | Methanol wt% | DMC wt% | | | | | |
| Fraction 1 | 66.5 | 33.5 | 90 | 59.9 | 30.2 | 28.2 | 2.0 |
| Fraction 2 | 66.2 | 33.8 | 125 | 82.8 | 42.3 | 38.9 | 3.3 |
| Fraction 3 | 66.3 | 33.7 | 95 | 63.0 | 32.0 | 29.6 | 2.4 |
| Fraction 4 | 66.1 | 33.9 | 93 | 61.5 | 31.5 | 28.9 | 2.6 |
| Fraction 5 | 66.2 | 33.8 | 91 | 60.2 | 30.8 | 28.3 | 2.4 |
| Fraction 6 | 66.4 | 33.6 | 95 | 63.1 | 31.9 | 29.7 | 2.2 |
| Fraction 7 | 66.5 | 33.5 | 87 | 57.9 | 29.1 | 27.2 | 1.9 |
| Total | | | 676 | 448.2 | 227.8 | 210.9 | 16.8 |

Example 4

In this example, the preset value of the mass percentage of carbonate contained in the rectified fraction was 32%.

1565.8 g of caprolactone, 1350.1 g of 1,6-hexanediol, and 0.2818 g of isopropyl titanate were weighed, and then added to a glass reactor equipped with an oil bath jacket, stirrer, gas inlet, and rectification column. Vacuum extraction and nitrogen ventilation were conducted for three times and a normal pressure was maintained. Under the protection of nitrogen, the reaction temperature was raised to 160 °C, and 1000 g (total predetermined stoichiometric amount of carbonate feed) dimethyl carbonate was slowly added dropwise to the system. Since the temperature at the top of the column was observed to rise, the feed was paused (198 g was fed) and refluxed completely for 1 h, then the fraction was continuously produced at a reflux ratio of 1.7:1. The ratio of methanol: DMC in the fraction fluctuated within the range of 67.6:32.4-75.2:24.8 wt%. During the feeding process, the composition of the fraction was continuously monitored (see Table 4). According to the results for the mass of the fraction and composition of the fraction in the previous 4 monitorings, the addition amount of DMC should be decreased by 20.6 g. After the addition of 979.4 g DMC was actually added, the feed was stopped and the fraction 5 was taken for analysis; and according to the analysis result of fraction 5, 0.5 g DMC should be added additionally, but actually DMC that should be added additionally was not added.

After the dropwise addition of dimethyl carbonate was completed (4 hours), the temperature was raised to 200 °C within 60 minutes, and the reaction was maintained under 200 °C for 1 hour. The temperature in the top of the column was observed to decrease. The system pressure was reduced to below 3 kPa with an oil pump, and the reaction was maintained under 200 °C for 9 hours. The vacuum was turned off and the nitrogen was replenished to equilibrate the pressure.

In this example, until the last sampling, 347.5 g of methanol and 143.5 g of dimethyl carbonate were contained in the fraction. According to the conversion of methanol, the mass $Z_0$ of the carbonates participating in the reaction was 488.4 g, and the total mass of the corresponding carbonates in the reaction and in the azeotrope was 631.9 g. Theoretically, corresponding to 631.9g carbonate, the mass $Z_2$ of the carbonate required to participate in the production of the target product was 473.4 g, and the mass $Z_0$ of the carbonate used in the reaction actually participated in the production of the target product was 488.4 g.

Due to the decreased addition of 20.6 g DMC, the equivalent of DMC participating in the reaction was decreased by 15.4 g, so that the mass of the carbonate used in the reaction actually participated in the production of the target product after the addition $Z_1 = Z_0-15.4 = 473.0$ g, $| Z_1-Z_2 | 100\% / Z_2 = 0.08\%$.

The preset hydroxyl value of the product was 112.0 mgKOH / g, and the hydroxyl value measured by actual sampling was 113.1 mgKOH / g. Discharge was performed after adjusting the temperature of the product to about 100 °C. The Ti residue of the product was measured to be 15.0 ppm.

In this example, if the decreased addition of 20.6 g DMC was not conducted, the hydroxyl value of the obtained product was expected to be reduced to 106 mgKOH / g, and the operation of the decreased addition of dimethyl carbonate can allow the hydroxyl value of the obtained product and the preset hydroxyl value of the product closer to each other.

Table 4

| Fraction No. | Composition of Fraction ( wt% ) | | Fraction Mass /g | Methanol Mass as Fraction /g | DMC Mass as Fraction /g | Theoretical DMC Mass corresponding to methanol /g | DMC Mass Correction /g |
|---|---|---|---|---|---|---|---|
| | Methanol wt% | DMC wt% | | | | | |
| Fraction 1 | 75.2 | 24.8 | 97 | 72.9 | 24.1 | 34.3 | -10.3 |
| Fraction 2 | 72.7 | 27.3 | 103 | 74.9 | 28.1 | 35.2 | -7.1 |
| Fraction 3 | 70.2 | 29.8 | 99 | 69.5 | 29.5 | 32.7 | -3.2 |
| Fraction 4 | 68 | 32 | 101 | 68.7 | 32.3 | 32.3 | 0.0 |
| Fraction 5 | 67.6 | 32.4 | 91 | 61.5 | 29.5 | 28.9 | 0.5 |
| Total | | | 491 | 347.5 | 143.5 | 163.5 | -20.1 |

Example 5

In this example, the preset value of the mass percentage of carbonate contained in the rectified fraction was 32.5%.

1,789 g of 1,6-hexanediol and 0.1610 g of isopropyl titanate were weighed and then added to a glass reactor equipped with an oil bath jacket, stirrer, gas inlet, and rectification column. Vacuum extraction and nitrogen ventilation were conducted for three times and a normal pressure was maintained. Under the protection of nitrogen, the reaction temperature was raised to 200 °C, and 1700 g (total predetermined stoichiometric amount of carbonate feed) dimethyl carbonate was slowly added dropwise to the system. Since the temperature at the top of the column was observed to rise, fractions were continuously produced at a reflux ratio of 2:1 to 1:1. During the continuous feeding process of dimethyl carbonate, the reflux ratio was adjusted according to Table 5 below to maintain the absolute value of the difference between the mass percentage of carbonate contained in the rectified fraction and the preset value $\leq 2\%$, and to maintain the difference between the maximum value and the minimum value of the mass percentage of carbonate contained in the rectified fraction <2%. The reflux ratio and fraction mass during sampling (see Table 5 for results) were recorded. The ratio of methanol to DMC in the fraction was determined by GC correction factor method, and the ratio fluctuated within the range of 67.1:32.9-67.7:32.3 (wt%).

After the dropwise addition of dimethyl carbonate was completed (7.5 hours), according to the calculation results in Table 5, 3.4 g of dimethyl carbonate was added additionally, and actually a total amount of 1703.4 g dimethyl carbonate was added.

The reaction was maintained under 200 °C for 1.5 hours, and the temperature in the top of the column was observed to decrease. The pressure of the system was reduced below 1 kPa with an oil pump, and the reaction was maintained under 200 °C for 12 hours. The vacuum was turned off and the nitrogen was replenished to equilibrate the pressure.

In this example, until the last sampling, 745.6 g of methanol and 362.4 g of dimethyl carbonate were contained in the fraction. According to the conversion by methanol, the mass $Z0$ of carbonates participating in the reaction was 1048.0 g, and the total mass of the corresponding carbonates for the reaction and in the azeotrope was 1410.4 g. Theoretically, corresponding to 1410.4 g of carbonate, the mass $Z2$ of the carbonate required to participate in the production of the target product was 1050.5 g, and the mass $Z0$ of the carbonate used in the reaction actually participated in the production of the target product was 1048.0g before added additionally. $| Z0-Z2 | \times 100\% / Z2 = 0.2\%$.

Since 3.4 g of DMC was added additionally, 2.5 g of them was expected to participate in the reaction, so that the mass of carbonate used in the reaction that actually participated in the production of the target product after added additionally was $Z1 = Z0 + 2.5 = Z2$.

The preset hydroxyl value of the product was 56.0 mgKOH / g, and the hydroxyl value measured by actual sampling was 55.5 mgKOH / g. Discharge was conducted after adjusting the temperature of the product to about 100 °C. The Ti residue in the product was measured to be 11.0 ppm.

In this example, the content of dimethyl carbonate in the fraction was not significantly different from the preset value. If the operation of increasing dimethyl carbonate addition was not performed, the hydroxyl value of the obtained product was expected to be 57.8 mgKOH / g, which was still regarded as a qualified product In this example, the hydroxy value of the obtained product was closer to the preset hydroxy value of the product through the operation of adding additional dimethyl carbonate.

Table 5

| Fraction No. | Reflux Ratio | Composition of Fraction ( wt% ) | | Fraction Mass /g | Methanol Mass as Fraction /g | DMC Mass as Fraction /g | Theoretical DMC Mass corresponding to methanol /g | DMC Mass Correction /g |
|---|---|---|---|---|---|---|---|---|
| | | Methanol wt% | DMC wt% | | | | | |
| Fraction 1 | 1:1 | 67.13 | 32.87 | 221 | 148.4 | 72.6 | 71.4 | 1.2 |
| Fraction 2 | 1.3:1 | 67.20 | 32.80 | 223 | 149.9 | 73.1 | 72.2 | 1.0 |
| Fraction 3 | 1.5:1 | 67.22 | 32.78 | 219 | 147.2 | 71.8 | 70.9 | 0.9 |
| Fraction 4 | 1.7:1 | 67.21 | 32.79 | 220 | 147.9 | 72.1 | 71.2 | 1.0 |
| Fraction 5 | 2:1 | 67.69 | 32.31 | 225 | 152.3 | 72.7 | 73.3 | -0.6 |
| Total | | | | 1108 | 745.6 | 362.4 | 359.0 | 3.4 |

Comparative Example 1

In this comparative example, the preset value of the mass percentage of carbonate contained in the rectified fraction was 32%. 864.8 g of 1,5-pentanediol, 981.2 g of 1,6-hexanediol, 0.1730 g of isopropyl titanate, and 1750 g of dimethyl carbonate were weighed, and then added to the 5L glass reactor equipped with the oil bath jacket, stirrer, gas inlet and the rectification column. Vacuum extraction and nitrogen ventilation were conducted for three times and a normal pressure was maintained. Nitrogen was introduced at a rate of 0.2 L / h, and the reaction temperature was 95 °C. Timing was started when the temperature at the column top was observed to increase, and the fractions were continuously produced at a reflux ratio of 1:1, and the reflux ratio was continuously increased after the temperature of the column top was rising, and the maximum reflux ratio was increased to 2:1. The ratio of methanol: DMC in the fraction was 58:42-68:32 (wt%). As the reaction proceeds, the temperature of the system was continuously increased, and the temperature was raised to 260 °C within 8 hours, and the reaction was maintained under 260 °C for 2 hours. The temperature in the top of the column was observed to decrease. The flow rate of nitrogen was adjusted to 1L / h with an oil pump to make the system pressure reduced to below 4 kPa, and the reaction was maintained under 260 °C for 15 hours. The vacuum was turned off and the nitrogen was replenished to equilibrate the pressure.

The preset hydroxyl value of the product was 56.0 mgKOH / g, and the hydroxyl value measured by actual sampling was 135.76 mgKOH / g. Discharge was conducted after adjusting the temperature of the product to about 100 °C. The Ti residue in the product was measured to be 13.8 ppm.

Comparative Example 2

In this comparative example, the preset value of the mass percentage of carbonate contained in the rectified fraction was 32%. 20769.8 g of 1,5-pentanediol, 1.77 g of isopropyl titanate, and 21050 g of dimethyl carbonate were weighed, and then added to a stainless steel reactor equipped with an oil bath jacket, stirrer, gas inlet, and rectification column. Vacuum extraction and nitrogen ventilation were conducted for three times and a normal pressure was maintained. The reaction temperature was 95 °C. Timing was started when the temperature at the column top was observed to increase. The fractions were continuously produced at a reflux ratio of 3:1 and the temperature was slowly raised. The ratio of methanol to DMC in the fraction was 56:44-64:36. As the reaction proceeds, the temperature of the system was continuously increased, and the temperature was raised to 200 °C within 10 hours, and the reaction was maintained under 200 °C for 2 hours. The temperature in the top of the column was observed to decrease. The pressure of the system was reduced below 1 kPa with an oil pump, and the reaction was maintained under 200 °C for 10 hours. The vacuum was turned off and the nitrogen was replenished to equilibrate the pressure.

The preset hydroxyl value of the product was 112.0 mgKOH / g, and the hydroxyl value measured by actual sampling was 204.9 mgKOH / g. Discharge was conducted after adjusting the temperature of the product to about 100 °C. The Ti residue in the product was measured to be 12.1 ppm.

In the comparative Examples 1 and 2, the method of continuously feeding of DMC in the examples of the present invention was not adopted, the composition of fractions fluctuated greatly; and monitoring analysis of fraction and feed amount compensation of DMC were not adopted, and the hydroxyl value of products thereof seriously deviated from the preset value.

Comparative Example 3

The comparative example was Example 3 of Chinese Patent Application CN01813544.7, wherein low-polycarbonate diol was produced by adding DMC all together at one time. According to Example 3 therein, 1890.84 g of hexylene glycol and 1826.33 g of caprolactone were first reacted with a mixture of 281.3 g of DMC and 600.3 g of methanol in the first-stage reaction, and 558.02 g mixture of DMC / methanol was produced by distillation for 24.75 hours, which contained 6.43% DMC; 1380.07 g DMC was added in the second-stage reaction, and it took 15hs or longer to produce 1007.00 g mixture of DMC / methanol by distillation, which contained 32.21% DMC. Calculations indicated an excess of 39.97 g DMC. The hydroxyl value of the obtained product was 37 mgKOH / g, which was lower than the preset target (estimated at 56 mgKOH / g).

According to Chinese patent application CN01813544.7, in Example 4, the hydroxyl value of the product obtained in Example 3 was adjusted, and hexylene glycol and caprolactone were added additionally and were reacted for 5 hours.

In comparative Example 3, monitoring analysis of fraction and feed volume calculation of DMC were not adopted, and excessive feed of DMC was not stopped in time according to the change of fraction composition and feed volume, which resulted in excessive DMC participating in the reaction and the hydroxyl value of the product was less than the preset value, and led to the subsequent correction operation of hydroxyl value. In Comparative Example 3, because of multiple operations, the production time was significantly longer than those in the examples.

Compared with the comparative examples, examples 1-5 of the present invention have the advantages of stable reaction process, small fluctuations in the composition of fractions produced, stable hydroxyl value of products, and no need for hydroxyl value adjustment after the completion of the reaction, and rapid and simplified production process. Because of strict composition control of the fraction, example 1 has the advantages of no need for adjusting the mass of the carbonate, reducing the amount of calculation and operation. Compared with example 1, examples 2-5 have the advantage of less fluctuation in product parameters.

**Claims**

1. A synthesis method of a polycarbonate polyol, **characterized in that** raw material A containing a polyol or a mixture of a polyol and a lactone is subjected to a transesterification reaction with a carbonate to produce the polycarbonate polyol;

   the raw material A is fed to the reaction system all together at one time;
   the carbonate with a predetermined stoichiometric amount of carbonate feed is put into the reaction system in a manner of continuous feeding;
   an azeotrope of by-products and the carbonate is distilled during the reaction;
   during feeding process of the carbonate with a predetermined stoichiometric amount of carbonate feed, samples are taken to monitor mass percentage of the carbonate in the distillates;
   before the feeding process of the carbonate with a predetermined stoichiometric amount of carbonate feed is completed, the absolute value of the difference between the mass percentage of carbonate contained in rectified fraction and preset value is controlled to be $\leq 2\%$, and the difference between the maximum value and the minimum value of the mass percentage of carbonate contained in the rectified fraction is controlled to be $\leq 2\%$; and / or before the feeding process of the carbonate with a predetermined stoichiometric amount of carbonate feed is completed, based on the predetermined stoichiometric amount of carbonate feed, the amount of carbonate added to the reaction system increases or decreases correspondingly according to the mass percentage of carbonate in the rectified fraction which is higher or lower than the preset value, so that the mass $Z1$ of the carbonate actually consumed in the reaction to produce target product and the mass $Z2$ of the carbonate as theoretically required in reaction to produce target product satisfy the following relationship: $|Z1\text{-}Z2| \times 100\% / Z2 \leq 0.1\%$;
   wherein the "predetermined stoichiometric amount of carbonate feed" mentioned herein refers to: according to the preset mass fraction of carbonate contained in the rectified fraction, calculating the consumed amount of carbonate as theoretically required in reaction to produce polycarbonate polyol and the amount of unreacted carbonate which is taken out by rectification during the production process, and the predetermined stoichiometric amount of carbonate feed is obtained by adding the two amounts.

2. The synthesis method according to claim 1, **characterized in that** during the process of feeding carbonate into the reaction system in a manner of continuous feeding, a feed rate of the carbonate is controlled to be adding 1/15-1/2 of the predetermined stoichiometric amount of carbonate feed per hour, preferably 1/10-1/3, and more preferably 1/8-1/5.

3. The synthesis method according to any one of claims 1 to 2, **characterized in that** the rectified fraction is partially refluxed into the reaction system, and the reflux ratio is controlled to be 1:5 - 20:1, preferably 1:1-2:1;

    preferably, the reflux ratio of the rectified fraction is adjusted so that the absolute value of the difference between the mass percentage of the carbonate contained in rectified fraction and preset value is controlled to be $\leq 2\%$, and the difference between the maximum value and the minimum value of the mass percentage of the carbonate contained in the rectified fraction is controlled to be $\leq 2\%$;
    further preferably, according to the increase or decrease of the mass percentage of carbonate contained in the rectified fraction, the reflux ratio of the rectified fraction is correspondingly increased or decreased, so that the absolute value of the difference between the mass percentage of the carbonate contained in rectified fraction and preset value is controlled to be $\leq 2\%$, and the difference between the maximum value and the minimum value of the mass percentage of the carbonate contained in the rectified fraction is $\leq 2\%$.

4. The synthesis method according to any one of claims 1 to 3, **characterized in that** the synthesis method includes the following steps:

    (1) the raw material A is fed into the reaction system all together at one time, melted, and nitrogen displacement is conducted, and the atmospheric pressure is maintained after the nitrogen displacement; the temperature is raised to the transesterification reaction temperature, which is 95-260 °C, preferably 100-220 °C, more preferably 160-200 °C;
    (2) the carbonate with a predetermined stoichiometric amount of carbonate feed is continuously added to the reaction system; an azeotrope of by-products and carbonate is rectified during the reaction process, part of the rectified fraction is refluxed to the reaction system; during the feeding process of the carbonate with a predetermined stoichiometric amount of carbonate feed, samples are taken to monitor mass percentage of the carbonate in the fractions, the absolute value of the difference between the mass percentage of carbonate contained in the rectified fraction and the preset value is controlled to be $\leq 2\%$, and the difference between the maximum value and the minimum value of the mass percentage of carbonate contained in the rectified fraction is controlled to be $\leq 2\%$;
    preferably, based on the predetermined stoichiometric amount of carbonate feed, the amount of carbonate added to the reaction system increases or decreases correspondingly according to the mass percentage of carbonate in the rectified fraction which is higher or lower than the preset value, so that the mass Z1 of the carbonate actually consumed in the reaction to produce the target product and the mass Z2 of the carbonate as theoretically required in reaction to produce the target product are consistent or close to each other;
    (3) the fraction continues to be produced after the carbonate feed is completed; preferably, after the carbonate feed is completed, the reaction temperature is controlled to be 160-260 °C, further preferably 160-200 °C;
    (4) inert gas is introduced into the reaction system to perform gas stripping, and / or vacuum evacuation is performed; preferably, the vacuum evacuation reduces the reaction pressure to 10 kPa or less, more preferably 5 kPa or less.

5. The synthesis method according to any one of claims 1 to 4, **characterized in that** sampling and monitoring the mass percentage of carbonate in the fraction is real-time monitoring or the sampling and monitoring frequency of each batch of reaction is 1-100 times, preferably 5-10 times.

6. The synthesis method according to any one of claims 1 to 5, **characterized in that** the transesterification reaction is carried out in the presence of a catalyst, and the catalyst is fed into the reaction system all together at one time; preferably, the catalyst is one or more of alkali metal compounds, alkaline earth metal compounds, organometallic compounds, organic amine compounds; more preferably one or more of sodium hydroxide, sodium methoxide, sodium ethoxide, tetrabutyl titanate, isopropyl titanate, stannous octoate, triethylamine, pyridine, N-methylimidazole.

7. The synthesis method according to claim 6, **characterized in that** when the catalyst is one or more of alkali metal compound, alkaline earth metal compound, and organometallic compound, based on the corresponding metal element in the catalyst, mass fraction of the catalyst in the polycarbonate polyol obtained is ≤ 100ppm, preferably ≤25ppm, more preferably ≤14ppm;
when the catalyst is one or more of organic amine compounds, based on the nitrogen element in the catalyst, mass fraction of the catalyst in the polycarbonate polyol obtained is ≤20ppm, preferably ≤10ppm, more preferably ≤5ppm.

8. The synthesis method according to claim 6, **characterized in that** the catalyst is one or two of tetrabutyl titanate and isopropyl titanate, and the amount of the catalyst is 1-100 ppm of the mass of the polycarbonate polyol to be theoretically produced, preferably 4-90 ppm; or, based on the Ti element in the catalyst, the amount of the catalyst is 0.7-14 ppm of the mass of the polycarbonate polyol to be theoretically produced.

9. The synthesis method according to any one of claims 1 to 8, **characterized in that** the polyol is one or more of C2-C12 diols, triols, and tetrahydric alcohols, preferably one or more of ethylene glycol, diethylene glycol, 1,2-propanediol, 1,3-propanediol, 1,3-butanediol, 1,4-butanediol, 2-methyl-1,3-propanediol, 1,2-pentanediol, 1,5-pentanediol, 1,2-hexanediol, 1,6-hexanediol, neopentyl glycol, 3-methyl-1,5-pentanediol, 1,4-cyclohexanedimethanol, glycerin, trimethylolpropane, pentaerythritol;

the lactone is one or two of caprolactone or valerolactone;
the carbonate is selected from one or more of dialkyl carbonate, diaryl carbonate, and alkylene carbonate; preferably, the carbonate is one or more of dimethyl carbonate, diethyl carbonate, ethylene carbonate.

10. The synthesis method according to any one of claims 1 to 9, **characterized in that**, upon production of a rectified fraction, the carbonate feed is paused and the rectified fraction is completely refluxed for 0.5-2 hours.

**Patentansprüche**

1. Syntheseverfahren eines Polycarbonatpolyols, **dadurch gekennzeichnet, dass** ein Rohmaterial A, das ein Polyol oder ein Gemisch aus einem Polyol und einem Lacton enthält, einer Umesterungsreaktion mit einem Carbonat unterzogen wird, um das Polycarbonatpolyol herzustellen;

das Rohmaterial A dem Reaktionssystem auf einmal vollständig zugeführt wird;
das Carbonat mit einem vorbestimmten stöchiometrischen Ausmaß an Carbonatzufuhr in das Reaktionssystem auf eine Weise des kontinuierlichen Zuführens eingeführt wird;
ein Azeotrop von Nebenprodukten und des Carbonats während der Reaktion destilliert wird;
während des Zufuhrprozesses des Carbonats mit dem vorbestimmten stöchiometrischen Ausmaß an Carbonatzufuhr Proben entnommen werden, um den Massenprozentsatz des Carbonats in den Destillaten zu überwachen;
bevor der Zufuhrprozess des Carbonats mit einem vorbestimmten stöchiometrischen Ausmaß an Carbonatzufuhr abgeschlossen ist, der absolute Wert der Differenz zwischen dem Massenprozentsatz des Carbonats, das in dem korrigierten Anteil enthalten ist, und dem voreingestellten Wert derart gesteuert wird, dass er ≤2 % beträgt, und der Differenz zwischen dem maximalen Wert und dem minimalen Wert des Massenprozentsatzes des Carbonats, das in dem korrigierten Anteil enthalten ist, derart gesteuert wird, dass er ≤2 % beträgt;
und/oder bevor der Zufuhrprozess des Carbonats mit einem vorbestimmten stöchiometrischen Ausmaß an Carbonatzufuhr abgeschlossen ist, die Menge von Carbonat, die zu dem Reaktionssystem hinzugegeben wird, auf Grundlage des vorbestimmten stöchiometrischen Ausmaßes an Carbonatzufuhr entsprechend gemäß dem Massenprozentsatz des Carbonats in dem korrigierten Anteil, der höher oder geringer als der voreingestellte Wert ist, zunimmt oder abnimmt, sodass die Masse $Z1$ des Carbonats, die tatsächlich in der Reaktion verbraucht wird, um das Zielprodukt herzustellen, und die Masse $Z2$ des Carbonats, wie theoretisch in der Reaktion erforderlich, um das Zielprodukt herzustellen, der folgenden Beziehung entsprechen: $| Z1-Z2 | \times 100 \% / Z2 \leq 0{,}1 \%$;
wobei sich das "vorbestimmte stöchiometrische Ausmaß an Carbonatzufuhr", wie in dieser Schrift erwähnt, auf Folgendes bezieht: gemäß dem voreingestellten Massenanteil des Carbonats, der in dem korrigierten Anteil enthalten ist, Berechnen der verbrauchten Menge von Carbonat, wie theoretisch in der Reaktion erforderlich, um Polycarbonatpolyol herzustellen, und der Menge von nicht umgesetztem Carbonat, die durch Korrektur während des Herstellungsprozesses herausgenommen wird, und das vorbestimmte stöchiometrische Ausmaß an Carbonatzufuhr durch Addieren der zwei Mengen erhalten wird.

**2.** Syntheseverfahren nach Anspruch 1, **dadurch gekennzeichnet, dass** während des Prozesses des Zuführens von Carbonat zu dem Reaktionssystem auf eine Weise des kontinuierlichen Zuführens eine Zufuhrrate des Carbonats derart gesteuert wird, dass 1/15-1/2 des vorbestimmten stöchiometrischen Ausmaßes an Carbonatzufuhr pro Stunde, vorzugsweise 1/10-1/3 und weiter bevorzugt 1/8-1/5 hinzugegeben werden.

**3.** Syntheseverfahren nach einem der Ansprüche 1 bis 2, **dadurch gekennzeichnet, dass** der korrigierte Anteil teilweise in das Reaktionssystem zurückgeführt wird und das Rückführverhältnis derart gesteuert wird, dass es 1:5-20:1, vorzugsweise 1:1-2:1 beträgt;

vorzugsweise das Rückführverhältnis des korrigierten Anteils derart eingestellt wird, dass der absolute Wert der Differenz zwischen dem Massenprozentsatz des Carbonats, das in dem korrigierten Anteil enthalten ist, und dem voreingestellten Wert derart gesteuert wird, dass er ≤2 % beträgt, und der Differenz zwischen dem maximalen Wert und dem minimalen Wert des Massenprozentsatzes des Carbonats, das in dem korrigierten Anteil enthalten ist, derart gesteuert wird, dass er ≤2 % beträgt;

vorzugsweise ferner gemäß der Erhöhung oder Verringerung des Massenprozentsatzes des Carbonats, das in dem korrigierten Anteil enthalten ist, das Rückführverhältnis des korrigierten Anteils entsprechend erhöht oder verringert wird, sodass der absolute Wert der Differenz zwischen dem Massenprozentsatz des Carbonats, das in dem korrigierten Anteil enthalten ist, und dem voreingestellten Wert derart eingestellt wird, dass er ≤2 % beträgt, und der Differenz zwischen dem maximalen Wert und dem minimalen Wert des Massenprozentsatzes des Carbonats, das in dem korrigierten Anteil enthalten ist, ≤2 % beträgt.

**4.** Syntheseverfahren nach einem der Ansprüche 1 bis 3, **dadurch gekennzeichnet, dass** das Syntheseverfahren die folgenden Schritte beinhaltet:

(1) das Rohmaterial A wird dem Reaktionssystem auf einmal vollständig zugeführt, geschmolzen und es findet eine Stickstoffverdrängung statt und der Atmosphärendruck wird nach der Stickstoffverdrängung beibehalten; die Temperatur wird auf die Umesterungsreaktionstemperatur angehoben, die 95-260 °C beträgt, vorzugsweise 100-220 °C, weiter bevorzugt 160-200 °C;

(2) das Carbonat mit einem vorbestimmten stöchiometrischen Ausmaß an Carbonatzufuhr wird kontinuierlich zu dem Reaktionssystem hinzugegeben; ein Azeotrop von Nebenprodukten und des Carbonats wird während des Reaktionsprozesses destilliert, ein Teil des korrigierten Anteils wird in das Reaktionssystem zurückgeführt; während des Zufuhrprozesses des Carbonats mit einem vorbestimmten stöchiometrischen Ausmaß an Carbonatzufuhr werden Proben entnommen, um den Massenprozentsatz des Carbonats in den Anteilen zu überwachen, wird der absolute Wert der Differenz zwischen dem Massenprozentsatz des Carbonats, das in dem korrigierten Anteil enthalten ist, und dem voreingestellten Wert derart gesteuert, dass er ≤2 % beträgt, und der Differenz zwischen dem maximalen Wert und dem minimalen Wert des Massenprozentsatzes des Carbonats, das in dem korrigierten Anteil enthalten ist, derart gesteuert, dass er ≤2 % beträgt; vorzugsweise nimmt die Menge von Carbonat, die zu dem Reaktionssystem hinzugegeben wird, auf Grundlage des vorbestimmten stöchiometrischen Ausmaßes an Carbonatzufuhr entsprechend gemäß dem Massenprozentsatz des Carbonats in dem korrigierten Anteil, der höher oder geringer als der voreingestellte Wert ist, zu oder ab, sodass die Masse Z1 des Carbonats, die tatsächlich in der Reaktion verbraucht wird, um das Zielprodukt herzustellen, und die Masse Z2 des Carbonats, wie theoretisch in der Reaktion erforderlich, um das Zielprodukt herzustellen, konsistent sind oder nahe beieinander liegen;

(3) der Anteil wird weiter hergestellt, nachdem die Carbonatzufuhr abgeschlossen wurde; vorzugsweise wird, nachdem die Carbonatzufuhr abgeschlossen wurde, die Reaktionstemperatur derart gesteuert, dass sie 160-260 °C, weiter bevorzugt 160-200 °C beträgt;

(4) Inertgas wird in das Reaktionssystem eingeführt, um Gas-Stripping durchzuführen, und/oder eine Vakuumverdampfung wird durchgeführt; vorzugsweise reduziert die Vakuumverdampfung den Reaktionsdruck auf 10 kPA oder weniger, weiter bevorzugt 5 kPa oder weniger.

**5.** Syntheseverfahren nach einem der Ansprüche 1 bis 4, **dadurch gekennzeichnet, dass** die Probenentnahme und Überwachung des Massenprozentsatzes des Carbonats in dem Anteil eine Echtzeitüberwachung oder -probenentnahme ist und die Überwachungshäufigkeit jeder Reaktionscharge das 1- bis 100-Fache, vorzugsweise 5- bis 10-Fache beträgt.

**6.** Syntheseverfahren nach einem der Ansprüche 1 bis 5, **dadurch gekennzeichnet, dass** die Umesterungsreaktion in Gegenwart eines Katalysators durchgeführt wird und der Katalysator dem Reaktionssystem auf einmal vollständig zugeführt wird;

vorzugsweise der Katalysator eines oder mehrere von Alkalimetallverbindungen, Erdalkalimetallverbindungen, metallorganischen Verbindungen, organischen Aminverbindungen; weiter bevorzugt eines oder mehrere von Natriumhydroxid, Natriummethoxid, Natriumethoxid, Tetrabutyltitanat, Isopropyltitanat, Zinnoctoat, Triethylamin, Pyridin, N-Methylimidazol ist.

7. Syntheseverfahren nach Anspruch 6, **dadurch gekennzeichnet, dass**, wenn der Katalysator eines oder mehrere von einer Alkalimetallverbindung, einer Erdalkalimetallverbindung und einer metallorganischen Verbindung ist, der Massenanteil des Katalysators in dem Polycarbonatpolyol auf Grundlage des entsprechenden Metallelements in dem Katalysator ≤100 ppm, vorzugsweise ≤25 ppm, weiter bevorzugt ≤14 ppm beträgt; wenn der Katalysator eines oder mehrere von organischen Aminverbindungen ist, der Massenanteil des Katalysators in dem erhaltenen Polycarbonatpolyol auf Grundlage des Stickstoffelements in dem Katalysator ≤20 ppm, vorzugsweise ≤10 ppm, weiter bevorzugt ≤5 ppm beträgt.

8. Syntheseverfahren nach Anspruch 6, **dadurch gekennzeichnet, dass** der Katalysator eines oder zwei von Tetrabutyltitanat und Isopropyltitanat ist und die Menge des Katalysators 1-100 ppm der Masse des Polycarbonatpolyols, die theoretisch herzustellen ist, vorzugsweise 4-90 ppm beträgt; oder auf Grundlage des Ti-Elements in dem Katalysator die Menge des Katalysators 0,7-14 ppm der Masse des Polycarbonatpolyols, die theoretisch herzustellen ist, beträgt.

9. Syntheseverfahren nach einem der Ansprüche 1 bis 8, **dadurch gekennzeichnet, dass** das Polyol eines oder mehrere von C2-C12-Diolen, -Triolen und vierwertigen Alkoholen, vorzugsweise eines oder mehrere von Ethylenglycol, Eiethylenglycol, 1,2-Propandiol, 1,3-Propandiol, 1,3-Butandiol, 1,4-Butandiol, 2-Methyl-1,3-propandiol, 1,2-Pentandiol, 1,5-Pentandiol, 1,2-Hexandiol, 1,6-Hexandiol, Neopentylglycol, 3-Methyl-1,5-pentandiol, 1,4-Cyclohexandimethanol, Glycerin, Trimethylolpropan, Pentaerythritol ist;

das Lacton eines oder zwei von Caprolacton oder Valerolacton ist; das Carbonat ausgewählt ist aus einem oder mehreren von Dialkylcarbonat, Diarylcarbonat und Alkylencarbonat; das Carbonat vorzugsweise eines oder mehrere von Dimethylcarbonat, Diethylcarbonat, Ethylencarbonat ist.

10. Syntheseverfahren nach einem der Ansprüche 1 bis 9, **dadurch gekennzeichnet, dass** bei der Herstellung eines korrigierten Anteils die Carbonatzufuhr pausiert wird und der korrigierte Anteil für 0,5-2 Stunden vollständig zurückgeführt wird.

## Revendications

1. Procédé de synthèse d'un polycarbonate polyol, **caractérisé en ce que** le produit de départ A contenant un polyol ou un mélange d'un polyol et d'une lactone est soumis à une réaction de transestérification avec un carbonate pour produire le polycarbonate polyol ;

le produit de départ A est introduit dans le système réactionnel en totalité en une seule fois ; le carbonate avec une quantité stœchiométrique prédéterminée d'alimentation en carbonate est placé dans le système réactionnel par introduction en continu ; un azéotrope de sous-produits et du carbonate est distillé pendant la réaction ; pendant le processus d'introduction du carbonate avec une quantité stœchiométrique prédéterminée d'alimentation en carbonate, des échantillons sont prélevés pour surveiller le pourcentage massique du carbonate dans les distillats ; avant que le processus d'introduction du carbonate avec une quantité stœchiométrique prédéterminée d'alimentation en carbonate soit terminé, la valeur absolue de la différence entre le pourcentage massique du carbonate contenu dans la fraction rectifiée et la valeur prédéfinie est contrôlée pour être ≤ 2 %, et la différence entre la valeur maximale et la valeur minimale du pourcentage massique de carbonate contenu dans la fraction rectifiée est contrôlée pour être ≤ 2 % ; et/ou avant que le processus d'introduction du carbonate avec une quantité stœchiométrique prédéterminée d'alimentation en carbonate soit terminé, en se basant sur la quantité stœchiométrique prédéterminée d'alimentation en carbonate, la quantité de carbonate ajoutée au système réactionnel augmente ou diminue de manière correspondante en fonction du pourcentage massique de carbonate dans la fraction rectifiée qui est supérieur ou inférieur à la valeur prédéfinie, de telle sorte que la masse Z1 du carbonate réellement consommé dans la réaction pour produire un produit cible et la masse Z2 du carbonate comme exigé en théorie dans la réaction pour produire le produit cible satisfont à la relation suivante : | Z1-Z2 | x 100 % / Z2 ≤ 0,1 % ;

dans lequel la « quantité stœchiométrique prédéterminée d'alimentation en carbonate » mentionnée dans la présente invention désigne : conformément à la fraction massique prédéfinie de carbonate contenue dans la fraction rectifiée, calculer la quantité consommée de carbonate comme exigé en théorie dans la réaction pour produire le polycarbonate polyol et la quantité de carbonate n'ayant pas réagi qui est sortie par rectification pendant le processus de production, et la quantité stœchiométrique prédéterminée d'alimentation en carbonate est obtenue en ajoutant les deux quantités.

2. Procédé de synthèse selon la revendication 1, **caractérisé en ce que** pendant le processus d'introduction de carbonate dans le système réactionnel par alimentation en continu, une vitesse d'introduction du carbonate est contrôlée de sorte à ajouter 1/15 à 1/2 de la quantité stœchiométrique prédéterminée d'alimentation en carbonate par heure, de préférence 1/10 à 1/3, et plus préférentiellement 1/8 à 1/5.

3. Procédé de synthèse selon l'une quelconque des revendications 1 à 2, **caractérisé en ce que** la fraction rectifiée est réintroduite partiellement par reflux dans le système réactionnel, et le rapport de reflux est contrôlé pour être de 1:5 à 20:1, de préférence de 1:1 à 2:1 ;

de préférence, le rapport de reflux de la fraction rectifiée est ajusté de telle sorte que la valeur absolue de la différence entre le pourcentage massique du carbonate contenu dans la fraction rectifiée et la valeur prédéfinie est contrôlée pour être ≤ 2 %, et la différence entre la valeur maximale et la valeur minimale du pourcentage massique du carbonate contenu dans la fraction rectifiée est contrôlée pour être ≤ 2 % ;

en outre de préférence, en fonction de l'augmentation ou de la diminution du pourcentage massique de carbonate contenu dans la fraction rectifiée, le rapport de reflux de la fraction rectifiée augmente ou diminue de manière correspondante, de telle sorte que la valeur absolue de la différence entre le pourcentage massique du carbonate contenu dans la fraction rectifiée et la valeur prédéfinie est contrôlée pour être ≤ 2 %, et la différence entre la valeur maximale et la valeur minimale du pourcentage massique du carbonate contenu dans la fraction rectifiée est de ≤ 2 %.

4. Procédé de synthèse selon l'une quelconque des revendications 1 à 3, **caractérisé en ce que** le procédé de synthèse inclut les étapes suivantes :

(1) le produit de départ A est introduit dans le système réactionnel en totalité en une seule fois, fondu, puis un déplacement par l'azote est mis en œuvre, et la pression atmosphérique est maintenue après le déplacement par l'azote ; la température est augmentée jusqu'à la température de réaction de transestérification, qui est de 95 à 260 °C, de préférence de 100 à 220 °C, plus préférentiellement de 160 à 200 °C ;

(2) le carbonate avec une quantité stœchiométrique prédéterminée d'alimentation en carbonate est ajouté en continu au système réactionnel ; un azéotrope de sous-produits et du carbonate est rectifié pendant le processus réactionnel, une partie de la fraction rectifiée est réintroduite par reflux dans le système réactionnel ; pendant le processus d'introduction du carbonate avec une quantité stœchiométrique prédéterminée d'alimentation en carbonate, des échantillons sont prélevés pour surveiller le pourcentage massique du carbonate dans les fractions, la valeur absolue de la différence entre le pourcentage massique de carbonate contenu dans la fraction rectifiée et la valeur prédéfinie est contrôlée pour être ≤ 2 %, et la différence entre la valeur maximale et la valeur minimale du pourcentage massique de carbonate contenu dans la fraction rectifiée est contrôlée pour être ≤ 2 % ; de préférence, en se basant sur la quantité stœchiométrique prédéterminée d'alimentation en carbonate, la quantité de carbonate ajoutée au système réactionnel augmente ou diminue de manière correspondante en fonction du pourcentage massique de carbonate dans la fraction rectifiée qui est supérieur ou inférieur à la valeur prédéfinie, de telle sorte que la masse Z1 du carbonate réellement consommé dans la réaction pour produire le produit cible et la masse Z2 du carbonate comme exigé en théorie dans la réaction pour produire le produit cible sont cohérentes l'une avec l'autre ou proches l'une de l'autre ;

(3) la fraction continue à être produite après que l'introduction de carbonate est terminée ; de préférence, après que l'introduction de carbonate est terminée, la température réactionnelle est contrôlée pour être de 160 à 260 °C, en outre de préférence de 160 à 200 °C ;

(4) un gaz inerte est introduit dans le système réactionnel pour réaliser un entraînement gazeux, et/ou une aspiration sous vide est réalisée ; de préférence, l'aspiration sous vide réduit la pression réactionnelle à 10 kPa ou moins, plus préférentiellement à 5 kPa ou moins.

5. Procédé de synthèse selon l'une quelconque des revendications 1 à 4, **caractérisé en ce que** l'échantillonnage et la surveillance du pourcentage massique de carbonate dans la fraction sont une surveillance en temps réel ou la fréquence d'échantillonnage et de surveillance de chaque lot de réaction est de 1 à 100 fois, de préférence de 5 à 10 fois.

6. Procédé de synthèse selon l'une quelconque des revendications 1 à 5, **caractérisé en ce que** la réaction de transestérification est mise en œuvre en présence d'un catalyseur, et le catalyseur est introduit dans le système réactionnel en totalité en une seule fois ;
de préférence, le catalyseur est un ou plusieurs parmi les composés métalliques alcalins, les composés métalliques alcalino-terreux, les composés organométalliques, les composés aminés organiques ; plus préférentiellement un ou plusieurs parmi l'hydroxyde de sodium, le méthoxyde de sodium, l'éthoxyde de sodium, le titanate de tétrabutyle, le titanate d'isopropyle, l'octoate stanneux, la triéthylamine, la pyridine, le N-méthylimidazole.

7. Procédé de synthèse selon la revendication 6, **caractérisé en ce que** lorsque le catalyseur est un ou plusieurs parmi un composé métallique alcalin, un composé métallique alcalino-terreux et un composé organométallique, en se basant sur l'élément métallique correspondant dans le catalyseur, la fraction massique du catalyseur dans le polycarbonate polyol obtenu est $\leq$ 100 ppm, de préférence $\leq$ 25 ppm, plus préférentiellement $\leq$ 14 ppm ;
lorsque le catalyseur est un ou plusieurs parmi les composés aminés organiques, en se basant sur l'élément azote dans le catalyseur, la fraction massique du catalyseur dans le polycarbonate polyol obtenu est $\leq$ 20 ppm, de préférence $\leq$ 10 ppm, plus préférentiellement $\leq$ 5 ppm.

8. Procédé de synthèse selon la revendication 6, **caractérisé en ce que** le catalyseur est un ou deux parmi le titanate de tétrabutyle et le titanate d'isopropyle, et la quantité du catalyseur est de 1 à 100 ppm de la masse du polycarbonate polyol à pouvoir être produite en théorie, de préférence de 4 à 90 ppm ; ou, en se basant sur l'élément Ti dans le catalyseur, la quantité du catalyseur est de 0,7 à 14 ppm de la masse du polycarbonate polyol à pouvoir être produite en théorie.

9. Procédé de synthèse selon l'une quelconque des revendications 1 à 8, **caractérisé en ce que** le polyol est un ou plusieurs parmi les diols, triols et tétrols en C2-C12, de préférence un ou plusieurs parmi l'éthylène glycol, le diéthylène glycol, le 1,2-propanediol, le 1,3-propanediol, le 1,3-butanediol, le 1,4-butanediol, le 2-méthyl-1,3-propanediol, le 1,2-pentanediol, le 1,5-pentanediol, le 1,2-hexanediol, le 1,6-hexanediol, le néopentylglycol, le 3-méthyl-1,5-pentanediol, le 1,4-cyclohexanediméthanol, la glycérine, le triméthylolpropane, le pentaérythritol ;

la lactone est une ou deux parmi la caprolactone ou la valérolactone ;
le carbonate est choisi parmi un ou plusieurs parmi un carbonate de dialkyle, un carbonate de diaryle et un carbonate d'alkylène ; de préférence, le carbonate est un ou plusieurs parmi le carbonate de diméthyle, le carbonate de diéthyle, le carbonate d'éthylène.

10. Procédé de synthèse selon l'une quelconque des revendications 1 à 9, **caractérisé en ce que**, lors de la production d'une fraction rectifiée, l'introduction de carbonate est mise en pause et la fraction rectifiée est entièrement évaporée au reflux pendant 0,5 à 2 heures.

**EP 3 730 535 B1**

**REFERENCES CITED IN THE DESCRIPTION**

**Patent documents cited in the description**

- JP 2885872 B
- JP 1822688 A
- CN 01813544
- CN 200410079804
- US 6566563 B1
- CN 200880116024
- CN 02813233